## Europäisches Patentamt
## European Patent Office
## Office européen des brevets

(19)

(11) Numéro de publication : **0 230 186 B1**

(12) **FASCICULE DE BREVET EUROPEEN**

(45) Date de publication du fascicule du brevet :
**23.01.91 Bulletin 91/04**

(51) Int. Cl.$^5$ : **H01G 1/11**

(21) Numéro de dépôt : **86402825.3**

(22) Date de dépôt : **16.12.86**

(54) **Système de sécurité anti-suppression pour condensateur.**

(30) Priorité : **20.12.85 FR 8518988**

(43) Date de publication de la demande :
**29.07.87 Bulletin 87/31**

(45) Mention de la délivrance du brevet :
**23.01.91 Builetin 91/04**

(84) Etats contractants désignés :
**DE GB IT**

(56) Documents cités :
**DE-A- 2 400 859**
**DE-A- 2 606 174**
**DE-B- 2 601 426**

(73) Titulaire : **COMPAGNIE EUROPEENNE DE COMPOSANTS ELECTRONIQUES LCC**
**50, rue Jean -Pierre Timbaud B.P. 301**
**F-92402 Courbevoie (FR)**

(72) Inventeur : **Mouries, Gérard**
**THOMSON-CSF SCPI 19, avenue de Messine**
**F-75008 Paris (FR)**
Inventeur : **Delalande, Francois**
**THOMSON-CSF SCPI 19, avenue de Messine**
**F-75008 Paris (FR)**

(74) Mandataire : **Ruellan-Lemonnier, Brigitte et al**
**THOMSON-CSF SCPI**
**F-92045 PARIS LA DEFENSE CEDEX 67 (FR)**

EP 0 230 186 B1

Jouve, 18, rue Saint-Denis, 75001 PARIS

## Description

La présente invention concerne un système de sécurité anti-surpression pour condensateurs, ces condensateurs pouvant être indifféremment de forme parallélépipédique ou cylindrique.

Certains condensateurs, et notamment ceux à diélectrique métallisé, ont l'inconvénient d'exploser lorsqu'ils sont accidentellement mis en court-circuit. Cette explosion résulte de l'accumulation de gaz dus à la détérioration du diélectrique. L'explosion de ces condensateurs peut se révéler dangereuse ou préjudiciable à leur environnement surtout lorsqu'il s'agit de condensateurs de puissance. Pour éviter ces désagréments, on a imaginé différents systèmes de déconnection lorsqu'une surpression se produit dans un condensateur. Ces systèmes sont basés sur la variation de volume du boîtier du condensateur qu'engendre cette surpression. Il existe des systèmes pour condensateurs cylindriques et d'autres pour condensateurs de forme parallélépipédique. Ils sont également coûteux à réaliser et ne donnent pas entièrement satisfaction.

On connaît, par DE-A-2 601 426, un système de sécurité anti-surpression comprenant une baguette qui répercute la surpression d'un condensateur. Cette baguette possède un couteau qu'elle peut actionner de façon à venir couper, lors de l'apparition d'une surpression, une lame conductrice faisant partie de l'une des connexions de sortie du condensateur

Afin de pallier ces inconvénients, l'invention propose un système de sécurité anti-surpression qui s'applique aussi bien pour les condensateurs de forme cylindrique que pour ceux de forme parallélépipédique. Ce système est bon marché car il fait intervenir un nombre minimum d'éléments. Il est également très efficace car la déconnection du condensateur s'effectue par une coupure nette de l'une des connexions de ce condensateur

L'invention a donc pour objet un système de sécurité anti-surpression par coupe-circuit pour condensateur basé sur la variation de volume de son boîtier, le coupe-circuit consistant en un couteau qui répercute la surpression du condensateur pour couper une lame conductrice faisant partie de l'une des connexions de sortie du condensateur, caractérisé en ce que le couteau est actionné par l'intermédiaire d'un câble autour d'un point d'articulation.

Le couteau est avantageusement disposé sur un support isolant sur lequel est également fixée la lame conductrice

Selon un mode préférentiel de réalisation, le couteau possède un pied fiché dans une fente du support entre la lame conductrice et le fond de la fente, le point d'articulation résultant de la mise en butée du pied sur le fond de la fente.

Le couteau est avantageusement réalisé en un matériau isolant tel que le verre époxy.

On peut donner à la partie tranchante du couteau une forme telle que la découpe de la lame conductrice commence à se faire par l'un ou l'autre bord de la lame.

L'invention sera mieux comprise et d'autres avantages apparaîtront au moyen de la description qui va suivre et des figures annexées parmi lesquelles :
- la figure 1 représente un condensateur à boîtier parallélépipédique équipé d'un système de sécurité anti-surpression selon l'invention,
- la figure 2 représente un condensateur à boîtier cylindrique équipé d'un système de sécurité anit-surpression selon l'invention,
- les figures 3 et 4 sont des vues de détail du système qui montrent la disposition du coupe-circuit,
- la figure 5 représente un coupe-circuit selon une variante de réalisation.

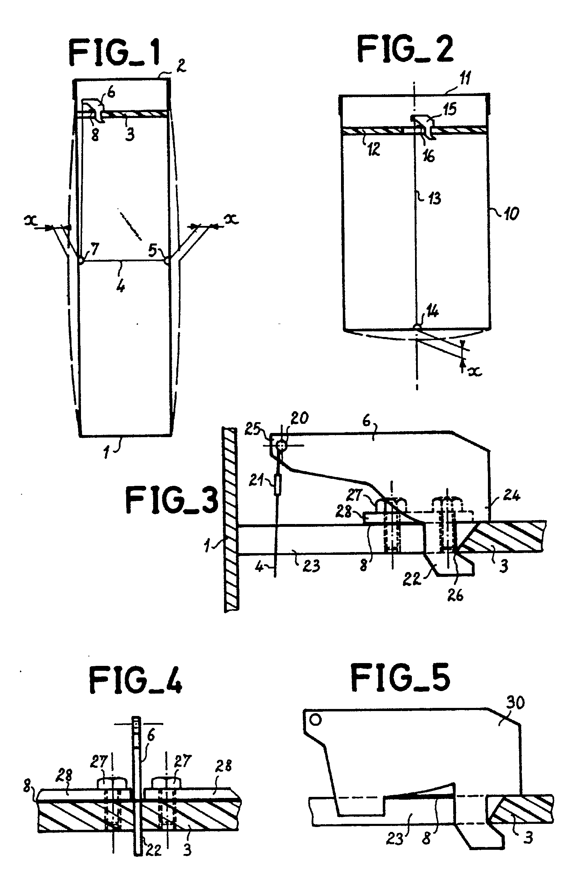

La figure 1 se rapporte à un boîtier le condensateur de forme parallélépipédique. Le boîtier 1 est fermé par un couvercle 2. Il renferme un condensateur que l'on n'a pas représenté et dont au moins l'une des connexions de sortie transite sur le support isolant 3 solidaire du boîtier 1. En cas de surpression du condensateur, ce sont les faces les plus étendues du boîtier qui ont tendance à se déformer le plus comme le montre la figure 1 où la flèche x représente la déformation des faces principales du boîtier lors d'une surpression. On peut mettre à profit cette caractéristique pour répercuter de manière sensible cette déformation sur le coupe-circuit. Par exemple, un câble 4 attaché en un point 5 de l'une des faces du boîtier 1 répercute coupe-circuit 6 la déformation de cette face augmentée de la déformation de la face opposée puisque le câble passe par un dispositif de renvoi 7 solidaire de cette dernière face. Ce dispositif de renvoi peut être une poulie miniature ou un simple anneau. Selon la disposition du condensateur, ou des condensateurs le cas échéant, dans le boîtier, le câble et le coupe-circuit seront situés sur le côté du boîtier ou en son milieu. D'autres chemins que celui représenté pour le câble 4 sont bien sûr possibles. Le coupe-circuit 6 est un couteau fiché dans le support isolant 3 et pouvant, sous l'action du câble 4 sectionner le conducteur 8 qui fait partie de l'une des connexions de sortie du condensateur. Son fonctionnement sera détaillé un peu plus loin.

La figure 2 se rapporte à un boîtier de condensateur de forme cylindrique. Le boîtier 10 est fermé par un couvercle 11. Il renferme un condensateur non représenté et dont au moins l'une des connexions de sortie transite sur le support isolant 12 solidaire du boîtier 10. Dans ce cas, on peut mettre à profit la symétrie du boîtier pour réaliser un système particulièrement simple. Par exemple, dans le cas d'un condensateur bobiné présentant un trou axial, le câble peut être placé suivant l'axe de révolution du boîtier. Il sera alors fixé d'un côté au point 14 situé au fond du boîtier 10, et de l'autre côté au couteau 15 de manière à répercuter une éventuelle déformation x du fond de boîtier en cas de surpression. Comme précédemment, le couteau 15 est fiché dans le support isolant 12 lequel est fendu en son centre de façon à laisser passer le câble 13 et à permettre la manoeuvre du couteau 15. En cas de nécessité, le couteau pourra donc sectionner le conducteur 16, sous l'action du câble 13.

La disposition du couteau sur son support est mieux décrite par les figures 3 et 4 et sont respectivement des figures de face et de côté. La figure 3 se rapporte plus particulièrement au cas du boîtier représenté à la figure 1. On ne voit qu'une partie du boîtier 1, du support isolant 3 et du câble 4. Le câble 4 est attaché à une extrémité du couteau 6 par passage dans un trou 20 et serrage du câble 4 sur sa partie en retour au moyen d'un oeillet tubulaire 21. Le couteau 6 possède un pied 22 qui vient se ficher dans la fente 23 pratiquée dans le support isolant 3. Le conducteur 8 est une lame fixée sur le support 3 dans une direction sensiblement perpendiculaire aux faces principales du couteau.

En fonctionnement normal le coupe-circuit 6 est immobilisé grâce à l'arrangement suivant. Le coupe-circuit repose sur le support 3 grâce à sa partie arrière 24 d'une part et grâce à la retenue provoquée par la présence du conducteur 8 d'autre part. Le pied 22 du coupe-circuit placé dans la fente 23 empêche tout déplacement latéral du couteau. Sa forme recourbée venant en butée au fond de la fente empêche le dégagement du couteau vers le haut. Le câble 4 passant dans la fente exerce une légère tension sur l'extrémité ou bras 25 du couteau, ce qui contribue à immobiliser plus efficacement le coupe-circuit. La zone 26 commune à la partie arrière du pied 22 et au fond de la fente est appelée zone d'articulation du couteau. Il est avantageux que cette zone se réduise pratiquement à un point, ce qui est rendu possible en biseautant le fond de la fente comme le montre la figure 3. Le conducteur 8 est une lame rapportée qui est fixée, par exemple par des vis 27, sur le support 3 de façon à assurer la continuité électrique entre les deux parties de la plaque de liaison électrique 28. L'ensemble formé par la plaque de liaison électrique et le conducteur 8 constitue l'une des connexions de sortie du condensateur.

Pour simplifier le dessin de la figure 4, le boîtier n'a pas été représenté, ainsi que le câble.

Lorsqu'une surpression se produit à l'intérieur du condensateur, celle-ci se répercute sur le boîtier et par conséquent sur le câble. Il faut pour cela que les parois du condensateur et du boîtier soient en contact l'une avec l'autre ou du moins très proches. La plaque de liaison 28 est relativement épaisse car elle doit assurer le passage de courants élevés. Le conducteur 8 sera lui moins épais pour pouvoir être sectionné assez facilement par le couteau 6. Sa partie située entre les deux parties de la plaque de liaison sera réduite au minimum possible pour ne pas trop perturber le passage du courant. Le couteau sera choisi de préférence en une matière isolante afin de ne pas court-circuiter les bords du conducteur 8 qu'il aurait sectionnés en cas de surpression. On le choisira par exemple en verre époxy, sa partie destinée à trancher étant aiguisée. La partie du couteau opposée au tranchant peut avoir une forme quelconque du moment que l'isolation en tension soit assurée. La longueur du bras 25 doit être calculée de façon à produire un bras de levier suffisant par rapport au point d'articulation 26 pour pouvoir sectionner le conducteur 8.

Le montage du coupe-circuit peut se faire de différentes façons. On peut le mettre en place avant de fixer définitivement le conducteur 8 ou après avoir fixé ce conducteur si la géométrie du pied 22 permet de réaliser de cette façon l'encliquetage du couteau. Le câble 4 peut être du type corde à piano.

Il est possible de donner au couteau une forme différente, par exemple pour couper dans l'autre sens comme le montre le dessin de la figure 5. Le couteau 30 est représenté dans son logement 23 du support isolant 3. Sa particularité par rapport au couteau des figures précédentes est la forme de sa partie tranchante qui permet de sectionner le conducteur 8 à partir de son autre bord. L'effort de coupe est maximum au début. La vitesse et la facilité de coupe s'accélèrent avec le phénomène de déformation.

Le système de sécurité anti-surpression selon l'invention a l'avantage d'assurer un passage du courant sans risque de détérioration pour le système de contact puisque ce n'est qu'une lame conductrice qui est sectionnée. Il assure une rupture du passage du courant en gardant l'isolement en tension (de l'ordre de plusieurs kV). Il évite tout risque de remise en contact après coupure, la coupure se faisant sans déformation d'un élément. La commande du coupe-circuit est facilitée car on travaille à faible force. Le déplacement du couteau par l'intermédiaire du câble est contrôlé et stable donc fidèle. Ce système nécessite très peu de pièces mécaniques pour sa fabrication. Il dissipe très peu de puissance lors de son fonctionnement (environ 0,8 W pour un courant de 300 A). Le câblage électrique du condensateur équipé de son système anti-surpression est facile. La fonction de coupure est assurée par rapport à des paramètres contrôlables par l'extérieur du condensateur (cote de gonflement du boîtier). Enfin, le système de sécurité est facile à intégrer au-dessus des éléments actifs, sous le couvercle.

**Revendications**

1. Système de sécurité anti-surpression par coupe-circuit pour condensateur basé sur la variation de volume de son boîtier, le coupe-circuit consistant en un couteau (6) qui répercute la surpression du condensateur pour couper une lame conductrice (8) faisant partie de l'une des connexions de sortie du condensateur, caractérisé en ce que le couteau est actionné par l'intermédiaire d'un câble (4) autour d'un point d'articulation (26).

2. Système de sécurité selon la revendication 1, caractérisé en ce que le couteau (6) est disposé sur un support isolant (3) sur lequel est également fixée ladite lame conductrice (8).

3. Système de sécurité selon l'une des revendications 1 ou 2, caractérisé en ce que la lame conductrice (8) est rattachée à ladite connexion de sortie (28) par des moyens de fixation amovibles (27).

4. Système de sécurité selon l'une quelconque des revendications 1 à 3, caractérisé en ce que le couteau possède un pied (22) fiché dans une fente (23) du support (3) entre la lame conductrice (8) et le fond de la fente, le point d'articulation (26) résultant de la mise en butée du pied sur le fond de la fente.

5. Système de sécurité selon la revendication 4, caractérisé en ce que le pied (22) possède une forme recourbée empêchant l'extraction du couteau après sa mise en place.

6. Système de sécurité selon l'une quelconque des revendications 1 à 5, caractérisé en ce que le couteau est en un matériau isolant.

7. Système de sécurité selon la revendication 6, caractérisé en ce que le couteau est en verre époxy.

8. Système de sécurité selon l'une quelconque des revendications 1 à 7, caractérisé en ce que le couteau (6) a une forme telle que, en cas de surpression, la découpe de la lame conductrice (8) commence à se faire par le bord situé le plus près du pied.

9. Système de sécurité selon l'une quelconque des revendications 1 à 7, caractérisé en ce que le couteau (30) a une forme telle que, en cas de surpression, la découpe de la lame conductrice (8) commence à se faire par le bord le plus éloigné du pied.

**Ansprüche**

1. Anti-Überdruck-Sicherheitssystem mit einem StromkreisUnterbrecher für einen Kondensator, das auf der Veränderung des Volumens seines Gehäuses beruht, wobei der StromkreisUnterbrecher aus einem Messer (6) besteht, das auf den Überdruck des Kondensators ansprechend eine leitende Lamelle (8) durchtrennt, die zu einem der Ausgangsanschlüsse des Kondensators gehört, dadurch gekennzeichnet, daß das Messer über ein Kabel (4) und um einen Gelenkpunkt (26) herum betätigt wird.

2. Sicherheitssystem nach Anspruch 1, dadurch gekennzeichnet, daß das Messer (6) auf einem Isolierträger (3), an welchem auch die genannte leitende Platte (8) befestigt ist, angeordnet ist.

3. Sicherheitssystem nach Anspruch 1 oder 2, dadurch gekennzeichnet, daß die leitende Lamelle (8) durch abnehmbare Befestigungsmittel (27) an dem genannten Ausgangsanschluß (28) befestigt ist.

4. Sicherheitssystem nach einem der Ansprüche 1 bis 3, dadurch gekennzeichnet, daß das Messer eine Basis (22) aufweist, die in einen Schlitz (23) des Trägers (3) zwichen der leitenden Lamelle (8) und dem Boden des Schlitzes eingesetzt ist, wobei die Anschlage der Basis auf dem Boden des Schlit zes den Gelenkpunkt (26) bildet.

5. Sicherheitssystem nach Anspruch 4, dadurch gekennzeichnet, daß die Basis (22) eine gekrümmte Form, die das Herausziehen des Messers nach seinem Anordnen verhindert, aufweist.

6. Sicherheitssystem nach einem der Ansprüche 1 bis 5, dadurch gekennzeichnet, daß das Messer aus einem Isoliermaterial besteht.

7. Sicherheitssystem nach Anspruch 6, dadurch gekennzeichnet, daß das Messer aus Epoxy-Glas besteht.

8. Sichersheitssystem nach einem der Ansprüche 1 bis 7, dadurch gekennzeichnet, daß das Messer (6) eine solche Form aufweist, daß im Falle eines Überdruckes das Durchtrennen der leitenden Lamelle (8) an dem Rand, der der Basis am nächsten kommt, beginnt.

9. Sicherheitssystem nach einem der Ansprüche 1 bis 7, dadurch gekennzeichnet, daß das Messer (30) eine solche Form aufweist, daß im Falle eines Überdruckes das Durchtrennen der leitenden Lamelle (8) an dem Rand, der von der Basis am weitesten entfernt ist, beginnt.

**Claims**

1. An anti-overpressure security system for a capacitor using a circuit breaker based on a variation in the volume of the case thereof, said circuit breaker consisting of a knife member (6) which responds to the overpressure of the capacitor and cuts a conductive layer (8) forming part of one of the output connections of the capacitor, characterized in that the knife member is actuated by means of a cable (1) to pivot around a fulcrum (26).

2. The security system as claimed in claim 1, characterized in that the knife member (6) is placed on an insulating support (3) on which said conductive layer (8) is also mounted.

3. The security system as claimed in claim 1, characterized in that the conductive layer (8) is attached to the said output connection (28) by retractable holding means (27).

4. The security system as claimed in any one of the preceding claims 1 through 3, characterized in that the knife member has a foot (22) secured in a gap (23) in the support (3) between the conductive layer (8) and the bottom of the gap, the fulcrum (26) being constituted by the abutment of the foot on the bottom of the gap.

5. The security systems claimed in claim 4, characterized in that the foot (22) has a hooked form preventing the removal of the knife member after it has been fitted.

6. The security system as claimed in any one of the preceding claims 1 through 5, characterized in that the knife member is made of an insulating material.

7. The security system as claimed in claim 6, characterized in that the knife member is made of epoxy resin.

8. The security system as claimed in any one of the preceding claims 1 through 7, characterized in that the knife member (6) has such a form that, when there is an overpressure, the cutting of the conductive layer (8) starts at an edge thereof adjacent to the foot.

9. The security system as claimed in any one of the preceding claims 1 through 7, characterized in that the knife member (30) has such a form that, when there is an overpressure, the cutting of the conductive layer (8) starts at the edge thereof remote from the foot.

FIG_1

FIG_2

FIG_3

FIG_4

FIG_5